# EUROPEAN PATENT APPLICATION

(11) **EP 3 273 291 A1**
(43) Date of publication of application: **24.01.2018**
(21) Application number: 15887484.2
(22) Date of filing: 27.03.2015
(51) Int. Cl.: G02C 7/02, G02B 5/30, G02B 27/26, G02C 7/12

(54) **MEMBER FOR EYEGLASSES AND EYEGLASSES**

(71) Applicant: Arisawa Mfg. Co., Ltd., Joetsu-shi, Niigata 943-8610 (JP)
(72) Inventor: SATO Tatsuya, Joetsu-shi Niigata 943-8610 (JP); KAKUBARI Yuichi, Joetsu-shi Niigata 943-8610 (JP)
(74) Representative: Tetzner, Michael
(86) International application number: PCT/JP2015/059761
(87) International publication number: WO 2016/157331

(57) **Abstract**

An eyeglass member which is attachable to and detachable from a frame mounted to a head of a user, including: a right-eye polarized-light modulation layer which has a first optical axis and modulates polarized light at a right-eye region positioned in front of a right eye of the user; a left-eye polarized-light modulation layer which has a second optical axis different from the first optical axis and modulates polarized light at a left-eye region positioned in front of a left eye of the user; a polarizing layer which is laminated on and astride both the right-eye polarized-light modulation layer and the left-eye polarized-light modulation layer and has an absorption axis extending in an equal direction across the right-eye region and the left-eye region; and a labelling portion which indicates a left-right orientation for mounting to the frame.

## Description

### BACKGROUND

### 1. TECHNICAL FIELD

The present invention relates to an eyeglass member and a pair of eyeglasses.

### 2. RELATED ART

There have been pairs of eyeglasses for three-dimensional images, into which a right-eye region positioned in front of the right eye of a user and a left-eye region positioned in front of the left eye of the user are integrated (see Patent Document 1, for example).

Patent Document 1: Japanese Patent Application Publication No. 2014-199301

However, since the right-eye region and the left-eye region are integrated in the above-described pairs of eyeglasses, there has been an issue of difficulty in discriminating its left and right when attaching to the frame.

### SUMMARY

In an aspect of the present invention, there is provided an eyeglass member which is attachable to and detachable from a frame mounted to a head of a user and, when mounted to the frame, is arranged in front of a right eye and a left eye of the user, the eyeglass member including: a right-eye polarized-light modulation layer which has a first optical axis and modulates polarized light at a right-eye region positioned in front of the right eye of the user; a left-eye polarized-light modulation layer which has a second optical axis different from the first optical axis and modulates polarized light at a left-eye region positioned in front of the left eye of the user; a polarizing layer which is laminated on and astride both the right-eye polarized-light modulation layer and the left-eye polarized-light modulation layer and has an absorption axis extending in an equal direction across the right-eye region and the left-eye region; and a labelling portion which indicates a left-right orientation for mounting to the frame.

In a second aspect of the present invention, there is provided a pair of eyeglasses including the eyeglass member and a frame to which the eyeglass member is attached.

The summary clause does not necessarily describe all necessary features of the embodiments of the present invention. The present invention may also be a sub-combination of the features described above.

### BRIEF DESCRIPTION OF THE DRAWINGS

Fig. 1 is a perspective view of a pair of eyeglasses 100.
Fig. 2 is an exploded perspective view of the pair of eyeglasses 100.
Fig. 3 is an exploded perspective view showing layer structure of an eyeglass member 110.
Fig. 4 is a front view of the eyeglass member 110.
Fig. 5 illustrates assembly of the pair of eyeglasses 100.
Fig. 6 is an enlarged partial view of a discrimination label 182.
Fig. 7 is an enlarged partial view of the discrimination label 182.
Fig. 8 is a cross-sectional partial view of the discrimination label 182.
Fig. 9 is a cross-sectional partial view of the discrimination label 182.
Fig. 10 is a perspective view of a pair of eyeglasses 200.
Fig. 11 is a front view of an eyeglass member 210.

### DESCRIPTION OF EXEMPLARY EMBODIMENTS

The embodiments do not limit the invention according to the claims, and all the combinations of the features described in the embodiments are not necessarily essential to means provided by aspects of the invention.

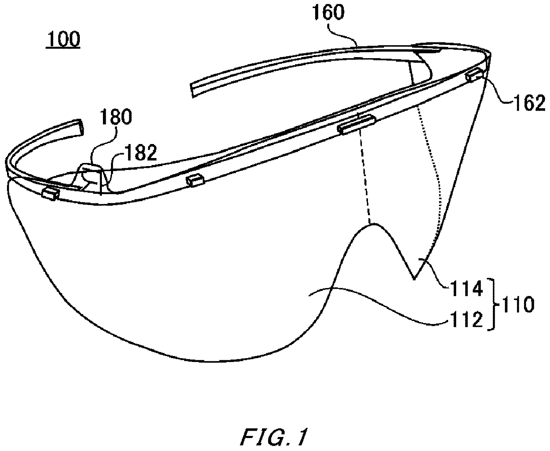

Fig. 1 is a perspective view of a pair of eyeglasses 100 in accordance with an embodiment. The pair of eyeglasses 100 includes an eyeglass member 110 and a frame 160.

The eyeglass member 110 has a right-eye region 112, a left-eye region 114 and a labelling portion 180, and is integrally formed of a material which modulates the polarization of incident light and transmits it. The right-eye region 112 and the left-eye region 114 in the eyeglass member 110 are arranged corresponding to, respectively, the right eye and the left eye of a user who wears the pair of eyeglasses 100.

The labelling portion 180 is arranged at either of left and right sides of the pair of eyeglasses 100. In the example shown in the figure, the labelling portion 180 is arranged protruding from the upper side of the right-eye region 112. Further, a discrimination label 182 is displayed at the labelling portion 180 toward the user who wears the pair of eyeglasses 100.

The frame 160 has fitting protrusions 162, which are fitted with parts of the eyeglass member 110 so as to hold the eyeglass member 110 in an attachable/detachable manner. When the pair of eyeglasses 100 is mounted to the head of the user with the eyeglass member 110 being mounted thereto, the right-eye region 112 of the eyeglass member 110 is arranged in front of the right eye of the user of the pair of eyeglasses 100, and the left-eye region 114 of the eyeglass member 110 is arranged in front of the left eye of the user. For example, "Visiera Model-712 (trade name)", which is commercially available from MORAINE CORP., may be used for the frame 160 as a part of the pair of eyeglasses 100.

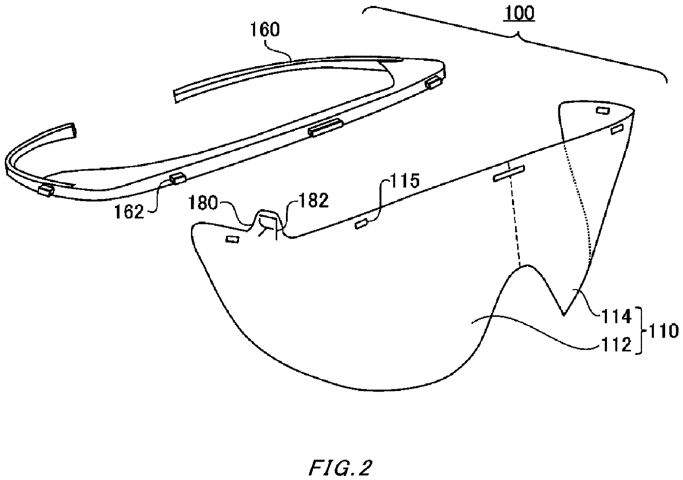

Fig. 2 is an exploded perspective view of the pair of eyeglasses 100. In the pair of eyeglasses 100, the frame 160 has a plurality of fitting protrusions 162 protruding in the forward direction. Also, in the pair of eyeglasses 100, the eyeglass member 110 has a plurality of fitting holes 115 which are in a complementary shape and arrangement to the fitting protrusions 162. The fitting protrusions 162 and the fitting holes 115 are mutually fitted, and thereby the eyeglass member 110 can be mounted and held to the frame 160.

The fitting protrusions 162 are arranged along the front surface of the curved frame 160, and therefore, when all of the fitting protrusions 162 and the fitting holes 115 are fitted together, eyeglass member 110 also bends along the curve of the frame 160. In this manner, the eyeglass member 110 is fixed to the frame 160 and provided with a high flexural rigidity. Thus, regardless of the fact that the frame 160 of the pair of eyeglasses 100 does not include a member such as a nose pad, the rigidity of the eyeglass member 110 itself allows the eyeglass member 110 to be free of movement.

Note that, when the eyeglass member 110 is strongly pulled away from the frame 160, the elasticity of the materials themselves of the eyeglass member 110 and the frame 160 allows the fitting protrusions 162 to be pulled out of the fitting holes 115 one by one. In this manner, a used eyeglass member 110 can be removed from the frame 160 and replaced with another eyeglass member 110. Such a structure allows the pair of eyeglasses 100 to be used as, for example, protection glasses for medical use. That is, replacement of the eyeglass member 110 at every use allows the pair of eyeglasses 100 to continue to be used with cleanliness.

Also, in the above-described example, the frame 160 is provided with the fitting protrusions 162 and the eyeglass member 110 is provided with the fitting holes 115. However, even if the eyeglass member 110 is provided with the fitting protrusions 162 and the frame 160 is provided with the fitting holes 115, the same function as that of the pair of eyeglasses 100 can also be achieved. Further, it is obvious that the number, shape and arrangement of the fitting protrusions 162 and the fitting holes 115 are not limited to the above-described form.

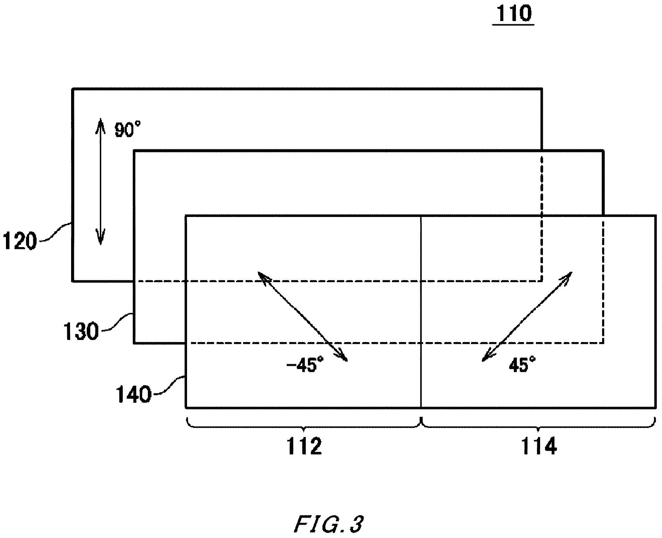

Fig. 3 is a schematic exploded perspective view of the eyeglass member 110, in which the outline of the eyeglass member 110 is shown as being a rectangular shape in order to clearly illustrate its optical properties. In Fig. 3, a deeper position in the direction into the paper is closer to the user when in use.

The eyeglass member 110 has a polarizing plate 120, a stick adhesive layer 130 and a polarized-light modulation layer 140. The polarizing plate 120 is integrally formed astride the right-eye region 112 and the left-eye region 114, and adhered to the polarized-light modulation layer 140 by the stick adhesive layer 130.

In the above-described eyeglass member 110, the polarizing plate 120 may have a polarizing layer and a pair of protection layers sandwiching the polarizing layer, for example. The polarizing layer can be formed of polyvinyl alcohol for example, and has a thickness of 40 µm for example. The protection layer may be formed of a triacetylcellulose (TAC) film, a cycloolefin-based film, or the like.

In the above-described eyeglass member 110, the polarized-light modulation layer 140 may also have a base layer, and an orientation film and a liquid crystal layer arranged on the base. The base layer can be formed using a similar material to that of the protection layer of the polarizing plate, for example. The base layer may also be formed of another material having optical isotropy. The thickness of the base layer is 80 µm, for example. The base layer may further be provided with a hard coating layer, anti-reflection layer, or the like.

The orientation film is formed of a known compound having a photo-orientation property, and is formed on each of the right-eye region 112 and the left-eye region 114 in the base layer. The orientation film, when irradiated with linearly polarized light such as ultraviolet light, is oriented in the polarization direction of the linearly polarized light, and further, orients the laminated liquid crystal layer according to its orientation. The thickness of the orientation film is 0.1 µm, for example.

The liquid crystal layer can be formed of a liquid crystal polymer having an ultraviolet curing property or a thermal curing property, arranged on the orientation film. The liquid crystal layer is oriented along the orientation of the orientation film, and modulates circularly polarized light into linearly polarized light and transmits it. The thickness of the liquid crystal layer is 1 to 2 µm, for example.

The above-described configuration allows the pair of eyeglasses 100 including the eyeglass member 110 to be used for viewing three-dimensional images. That is, if circularly polarized light for a right-eye image and circularly polarized light for a left-eye image rotating in opposite directions to each other are output from a three-dimensional image display apparatus, the right-eye region 112 transmits the right-eye image and blocks the left-eye image, while the left-eye region 114 transmits the left-eye image and blocks the right-eye image. In view of such an optical structure, when using the eyeglass member 110 mounted to the frame 160, the front and rear of the eyeglass member 110 are to be specified.

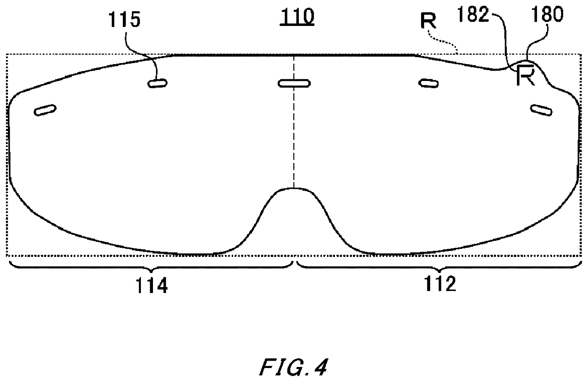

Fig. 4 is a developed view independently showing the eyeglass member 110 of the pair of eyeglasses 100. Fig. 4 is depicted from behind a surface of the pair of eyeglasses 100 which is seen from the user wearing the pair of eyeglasses 100 when using it, that is, the inner side of the frame 160 of the pair of eyeglasses 100 for the user.

The eyeglass member 110 has a right-eye region 112 and a left-eye region 114, which are respectively positioned in front of the right eye and the left eye of the user when used by the user. Note that, the right-eye region 112 and the left-eye region 114 is integrally and continuously formed.

In the eyeglass member 110, the labelling portion 180 is provided along the upper side of the right-eye region 112, protruding upward in the surface direction of the right-eye region 112. In the eyeglass member 110, the labelling portion 180 has a left-right symmetric outline in portions of the eyeglass member 110 other than the labelling portion 180, that is, portions of the eyeglass member 110 which remain if the labelling portion 180 is removed therefrom.

Note that, in the eyeglass member 110, the labelling portion 180 may be positioned inside a rectangle R which is in external contact with portions of the eyeglass member 110 other than the labelling portion 180 and indicated by dotted lines in the figure. In this manner, if a plurality of eyeglass members 110 are fabricated by clipping out of a wide film, the same number of eyeglass members 110 can be clipped out of a material having the same area as in the case of absence of the labelling portion 180.

As described above, when using the pair of eyeglasses 100, the front and rear of the eyeglass member 110 are to be specified. Here, the shape of the eyeglass member 110 is a shape which is entirely top-bottom asymmetric, and therefore the user does not confuse the top and bottom when mounting the eyeglass member 110 to the frame 160.

Also, the eyeglass member 110 has the labelling portion 180 at a right-sided position as shown in the figure. In this manner, regardless of the fact that portions other than the labelling portion 180 have a generally left-right symmetric shape, the presence of the labelling portion 180 allows the left-right orientation of the eyeglass member 110 when mounted to the frame 160 to be accurately distinguished. Thus, the user, when attaching the eyeglass member 110 to the frame 160, can easily discriminate the left and right of the eyeglass member 110 by seeing the labelling portion 180.

Further, in the example shown in the figure, a discrimination label 182, which takes the shape of the alphabet "R" standing for "right", is displayed at the labelling portion 180, facing the side of the user wearing the pair of eyeglasses 100. Thus, when the pair of eyeglasses 100 is seen from the user side, it is instinctively understood, without reading an instruction manual or the like, that the side at which the labelling portion 180 is provided should be positioned at the right side as seen from the user. In this manner, whether the labelling portion 180 indicates the right side of the eyeglass member 110 or its left side can be recognized, and it is ensured that the left and right of the eyeglass member 110 can be discriminated. Note that, display of the discrimination label 182 at the labelling portion 180 may be omitted. In that case, the left and right of the eyeglass member 110 are distinguished depending on the presence or absence of the labelling portion 180 itself.

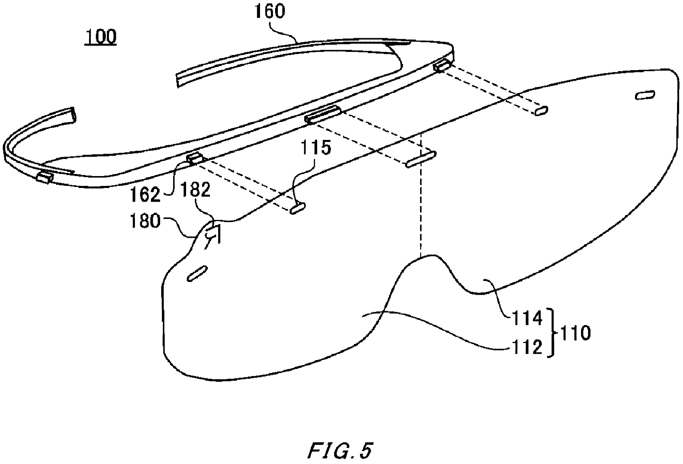

Fig. 5 illustrates the process of attaching the eyeglass member 110 to the frame 160. As shown in Fig. 1, the eyeglass member 110 attached to the frame 160 is curved along the frame 160. However, as shown in Fig. 5, the eyeglass member 110 before attached to the frame 160 is not curved. The flat eyeglass member 110 is curved in the process of fitting all the fitting holes 115 to the fitting protrusions 162.

Therefore, if the fitting protrusions 162 of the frame 160 and the fitting holes 115 of the eyeglass member 110 are each formed to be left-right symmetric, the eyeglass member 110 can be mounted to the frame 160 even if the left and right thereof are switched. If the left and right of the eyeglass member 110 are switched, the front and rear of the eyeglass member 110 are reversed as seen from the user wearing the pair of eyeglasses 100, and the expected optical properties cannot be realized when observing three-dimensional video images.

However, the eyeglass member 110 has the labelling portion 180 arranged at the right side as seen from the user. Also, the discrimination label 182 indicating the left-right discrimination is displayed at the labelling portion 180. Thus, if it is recognized that the labelling portion 180 is positioned at the right side as seen from the user when attaching the eyeglass member 110 to the frame 160, it is ensured to prevent erroneous orientation of the eyeglass member 110 when it is mounted.

The discrimination label 182 provided at the labelling portion 180 is also visible from those other than the user when the pair of eyeglasses 100 is assembled and worn by the user. Thus, if the wearing orientation of the frame 160 of the eyeglass member 110 is erroneous for some reason, another person who doesn't know how to use the pair of eyeglasses 100 can point out that the wearing orientation of the eyeglass member 110 is erroneous.

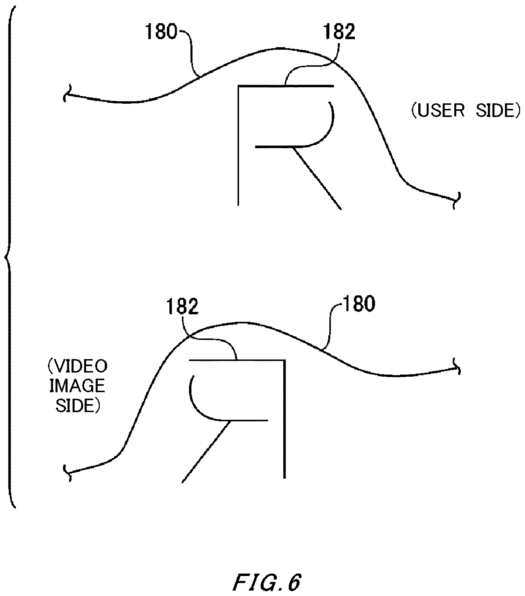

Fig. 6 is an enlarged partial view showing, on an enlarged scale, the discrimination label 182 displayed at the labelling portion 180 of the eyeglass member 110. In Fig. 6, the discrimination label 182 as seen from the side of the user wearing the pair of eyeglasses 100 shown in Fig. 1 and the discrimination label 182 as seen from the side of the video image which is observed by the user through the pair of eyeglasses 100 are shown together.

The character "R" shown as the discrimination label 182 at the labelling portion 180 has a shape which is asymmetric in the left-right direction. Thus, the appearance of the discrimination label 182 is different between as seen from the user side and the video image side. In particular, as seen from the video image side, the discrimination label 182 is displayed as a mirror image of the alphabet "R".

Thus, an operator who attaches the eyeglass member 110, when attempting to attach the eyeglass member 110 to the frame 160 with its left-right orientation reversed, can immediately recognize that the orientation of the eyeglass member 110 is wrong. Also, if the eyeglass member 110 is attached to the frame 160 with its left-right orientation reversed, the user of the pair of eyeglasses 100 can immediately recognize that the orientation of the eyeglass member 110 is wrong.

Note that, in the alphabet "R" displayed as the discrimination label 182, a part of the ring pattern formed in the upper half of the character is cut off. In this manner, the discrimination label 182 is formed as a group of open-ring patterns that does not include closed-ring patterns. Thus, even if the discrimination label 182 is formed by making cuts in the eyeglass member 110 itself or the like, hollowed portion is not created, and cutout of the eyeglass member 110 is not produced.

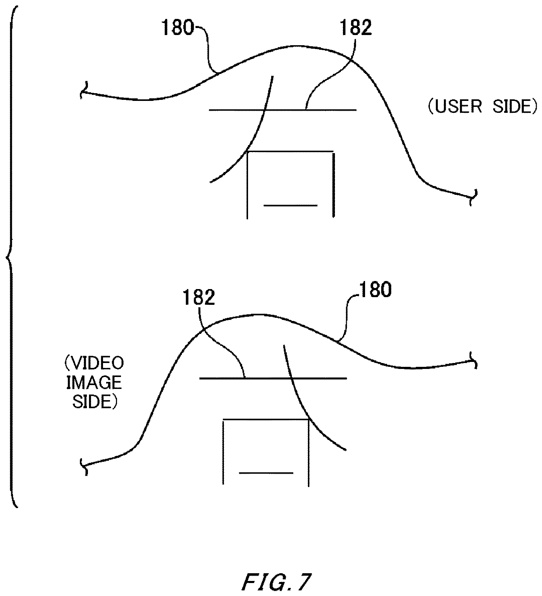

Fig. 7 is an enlarged partial view exemplifying, on an enlarged scale, another discrimination label 182 that can be displayed at the labelling portion 180. In Fig. 7, the discrimination label 182 as seen from the side of the user wearing the pair of eyeglasses 100 shown in Fig. 1 and the discrimination label 182 as seen from the side of the video image which is observed by the user through the pair of eyeglasses 100 are shown together.

At the labelling portion 180 shown in Fig. 7, a discrimination label 182 which takes the shape of the kanji character "MIGI (right)" is displayed. Thus, when the pair of eyeglasses 100 is seen from the user side, it is instinctively understood that the side at which the labelling portion 180 is provided should be positioned at the right side as seen from the user.

The character "MIGI" as the discrimination label 182 has a shape which is asymmetric in the left-right direction. Thus, its appearance is different between as seen from the user side and the video image side. In particular, as seen from the video image side, the discrimination label 182 is displayed as a mirror image of the kanji character "MIGI", and therefore it is easy to realize the difference between the left and right of the eyeglass member 110. Similarly, when attempting to attach the eyeglass member 110 to the frame 160 with its left and right orientation reversed, it is also easy to realize that.

Further, in the character "MIGI" displayed as the discrimination label 182, a part of the ring pattern formed in the lower half of the character is cut off. In this manner, the discrimination label 182 is formed as a group of open-ring patterns that does not include closed-ring patterns.

Note that, it is obvious that the discrimination label 182 is not limited to the character such as "R" or "MIGI". Also, the discrimination label 182 may be displayed by figures, colors or the like. Further, it is obvious that the discrimination label 182 formed at the labelling portion 180 is not limited to a single character or a single symbol, and quality label, trade name, manufacturer's name, handling precautions may also be written as the discrimination label 182 in the labelling portion 180.

In this way, the labelling portion 180 may be arranged at either one of the right-eye region 112 and the left-eye region 114 of the eyeglass member 110. Also, the labelling portion 180 may be formed protruding outward in the surface direction of the eyeglass member 110 along the outer perimeter of the eyeglass member 110, or may be formed by notching a part of the outer perimeter of the eyeglass member 110. Note that, it is preferable to take into consideration the arrangement of the labelling portion 180 and the discrimination label 182 so as not to narrow the visual field of the pair of eyeglasses 100.

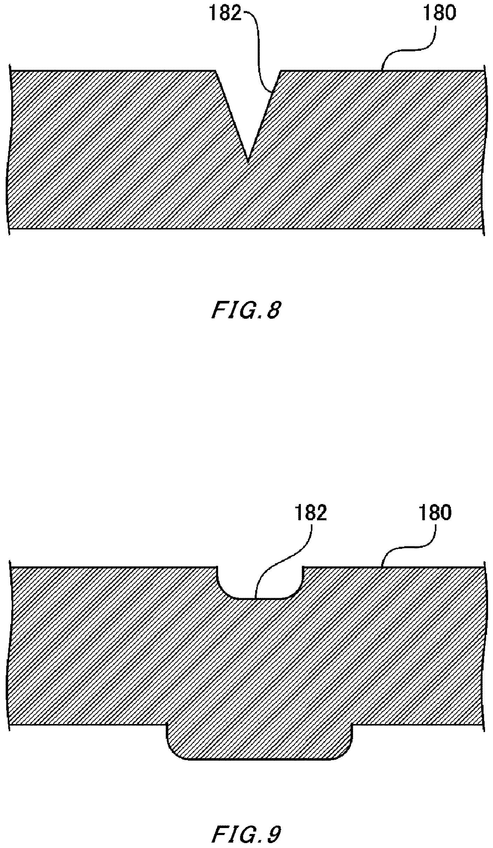

Fig. 8 is a cross-sectional view of the discrimination label 182 in the labelling portion 180. The cross section shown in Fig. 7 shows a cross section that intersects with one of the linear patterns forming the discrimination label 182.

As shown in the figure, the discrimination label 182 is formed by cuts formed in the thickness direction of the labelling portion 180. Such cuts can be formed by the half-cut processing, which makes cuts that are shallower than the thickness of the eyeglass member 110. Thus, the cutting tool used for cutting out the eyeglass member 110 is provided with a cutting blade which has the same shape as and a different height from the pattern of the discrimination label 182, and thereby the discrimination label 182 can be formed at the same time as the cutting-out processing of the eyeglass member 110.

Fig. 9 is a cross-sectional view of another discrimination label 182 in the labelling portion 180. The cross section shown in Fig. 9 shows a cross section that intersects with one of the linear patterns forming the discrimination label 182.

The discrimination label 182 shown in the figure is formed by emboss processing to the labelling portion 180. In this manner, the discrimination label 182 drawn in bold lines can be formed in the labelling portion 180 without producing swarf, dust or the like. Since the formation in the emboss processing can also be achieved by press processing using a die, substantially the same equipment as used for clipping out the eyeglass member 110 can be used for the formation.

In this way, by further providing the discrimination label 182 in the labelling portion 180, it is ensured that the left-right orientation of the eyeglass member 110 can be recognized. Also, the method such as half-cut processing or emboss processing allows the discrimination label 182 to be formed with the same equipment and operations as used for clipping out or cutting out the eyeglass member 110, without using other equipment such as for coating, printing or sticking.

Note that, although the examples in which the discrimination label 182 is formed by half-cut processing and emboss processing have been described, the method for forming the discrimination label 182 is not limited to the above-described methods. For example, the discrimination label 182 may be formed by printing, coating, transferring or the like. Also, the discrimination label 182 may be formed by a seal, a sticker or the like.

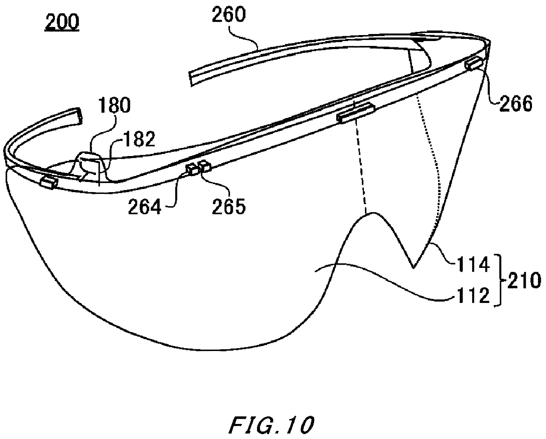

Fig. 10 is a perspective view of a pair of eyeglasses 200 in accordance with another embodiment. The pair of eyeglasses 200 has the same structure as that of the pair of eyeglasses 100 shown in Fig. 1, etc. except for portions described below. Thus, the same reference numbers are given to common elements of the pair of eyeglasses 200, and overlapping descriptions are omitted. The pair of eyeglasses 200 has an eyeglass member 210 and a frame 260 supporting the eyeglass member 210.

The pair of eyeglasses 200 has a different structure from the pair of eyeglasses 100 in the shapes of some fitting protrusions 264, 266 provided in the frame 260 and the shapes of fitting holes 117, 119 provided in the eyeglass member 210 and corresponding to the fitting protrusions 264, 266. The shapes of the fitting protrusions 264, 266 will be described with reference to Fig. 10.

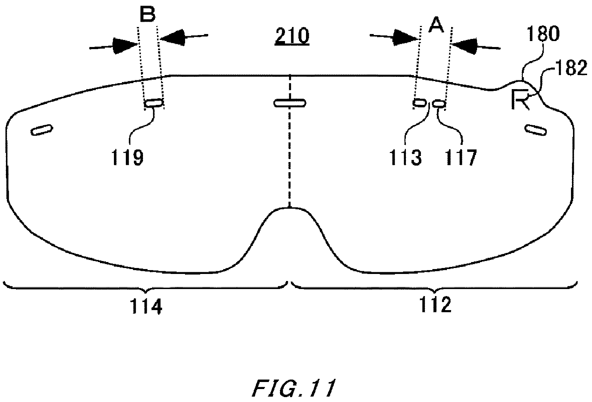

Fig. 11 is a developed view independently showing the eyeglass member 210 of the pair of eyeglasses 200. In the eyeglass member 210, a fitting hole 117 arranged in the right-eye region 112 has a shape which is complementary to one fitting protrusion 264 of the frame 260. Also, in the eyeglass member 210, a fitting hole 119 arranged in the left-eye region 114 has a shape which is complementary to one fitting protrusion 266 of the frame 260.

Here, the entire width A of the fitting hole 117 formed in the right-eye region 112 of the eyeglass member 210 is greater than the width B of the fitting hole 119 arranged in the left-eye region 114 of the eyeglass member 210. Also, at the middle of the fitting hole 117 in the width direction, a bridge portion 113 connecting the inner sides of the fitting hole 117 in the radial direction is vertically provided as shown in the figure. Note that, as shown in Fig. 10, the fitting protrusion 264 corresponding to the fitting hole 117 is provided with a groove 265 at a position which is complementary to the bridge portion 113.

Therefore, in the pair of eyeglasses 200, when attempting to attach the eyeglass member 210 to the frame 260 with its left-right direction orientation being different from a presumed orientation, the fitting protrusion 266 cannot be fitted into the fitting hole 117, which is stopped up with the bridge portion 113 at its middle. Also, the fitting protrusion 264 having a greater entire width A cannot be fitted into the fitting hole 119 having a smaller width.

In this way, in the pair of eyeglasses 200, some fitting protrusions 264, 266 and fitting holes 117, 119 form a fitting preventing portion which prevents fitting between the frame 260 and the eyeglass member 210. In this manner, when attempting to mount the eyeglass member 210 with its orientation being different from a presumed orientation, attachment of the eyeglass member 210 to the frame 260 with a wrong orientation can be prevented in advance.

As described above, in the pair of eyeglasses 200, by virtue of the fitting preventing portion including the fitting protrusions 264, 266 and the fitting holes 117, 119, the eyeglass member 210 is not to be mounted to the frame 260 with a wrong orientation. If such a fitting preventing portion is formed in the pair of eyeglasses 200, the labelling portion 180 of the eyeglass member 210 may be omitted. In this manner, the shape of the eyeglass member 210 can be made simple and the die for the cutting-out processing can be easily manufactured.

On the other hand, if the labelling portion 180 including the discrimination label 182 indicating the orientation of the eyeglass member 210 is also provided in the eyeglass member 210 used for the pair of eyeglasses 200 having the fitting preventing portion, it is easy for the user to initially recognize the correct orientation of the eyeglass member 210. Thus, the number of times that the fitting preventing portion including the fitting protrusions 264, 266 and the fitting holes 117, 119 prevents the eyeglass member 210 from being mounted to the frame 260 is reduced, and the attachment of the eyeglass member 210 to the frame 260 can be completed quickly.

Note that, in this embodiment as well, even if the eyeglass member 210 is provided with the fitting protrusions 264, 266 and the frame 260 is provided with the fitting holes 117, 119, the same function as that of the pair of eyeglasses 200 shown in the figure can also be achieved. Also, it is obvious that the number, shape and arrangement of the fitting protrusions 264, 266 and the fitting holes 117, 119 are not limited to the above-described form.

In the eyeglass members 110, 210 exemplified above, the labelling portion 180 is provided protruding from the upper side of the right-eye region 112. However, the labelling portion 180 is not limited to be arranged above the right-eye region 112. The labelling portion 180 may be provided at any position along the perimeter of the eyeglass member 110 as long as the field of view of the user using the pair of eyeglasses 100 is not obstructed. Thus, the labelling portion 180 may also be provided at a side portion of the eyeglass member 110, or may be provided at its bottom portion, for example. The labelling portion 180 may also be provided in the left-eye region 114.

Note that, even if the arrangement and shape of the labelling portion 180 in the eyeglass member 110 is different from the above-described examples, it is preferable to arrange the labelling portion 180 inside the rectangle R with which the right-eye region 112 and the left-eye region 114 are in internal contact. In this manner, reduction in usage efficiency of the material due to providing the labelling portion 180 can be prevented.

Also, the shape of the labelling portion 180 is not limited to the shape shown in the figure. For example, the shape itself of the labelling portion 180 may be formed to display or imply a character, symbol or the like that represents the left-right or front-rear discrimination. Also, the labelling portion 180 may be formed by mutually altering the shapes, for example, corner roundness of the right-eye region 112 and the left-eye region 114. Further, the labelling portion 180 is not limited to have a shape protruding from the eyeglass member 110, and may also have a shape formed by making cuts inwardly from the perimeter of the eyeglass member 110 or may be a depression or the like.

Further, the structure of the labelling portion 180 itself is not limited to the above-described examples and, for example, the labelling portion 180 may be added to the right-eye region 112 and the left-eye region 114 in another operation after fabricating them in a left-right symmetric shape. The material of the labelling portion 180 may also be the same as the materials of the right-eye region 112 and the left-eye region 114, or may be another material. Also, the method for attachment of the labelling portion 180 may be sticking it with the stick adhesive layer provided on the labelling portion 180, or may be fixing it by adhesion, thermal welding or the like.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

100, 200: pair of eyeglasses; 110, 210: eyeglass member; 113: bridge portion; 115, 117, 119: fitting hole; 112: right-eye region; 114: left-eye region; 120: polarizing plate; 130: stick adhesive layer; 140: polarized-light modulation layer; 160, 260: frame; 162, 264, 266: fitting protrusion; 180: labelling portion; 182: discrimination label; 265: groove

## Claims

1. An eyeglass member which is attachable to and detachable from a frame mounted to a head of a user and, when mounted to the frame, is arranged in front of a right eye and a left eye of the user, the eyeglass member comprising:
a right-eye polarized-light modulation layer which has a first optical axis and modulates polarized light at a right-eye region positioned in front of the right eye of the user;
a left-eye polarized-light modulation layer which has a second optical axis different from the first optical axis and modulates polarized light at a left-eye region positioned in front of the left eye of the user;
a polarizing layer which is laminated on and astride both the right-eye polarized-light modulation layer and the left-eye polarized-light modulation layer and has an absorption axis extending in an equal direction across the right-eye region and the left-eye region; and
a labelling portion which indicates a left-right orientation for mounting to the frame.

2. The eyeglass member according to claim 1, wherein the labelling portion is arranged at either one the right-eye region and the left-eye region.

3. The eyeglass member according to claim 1 or 2, wherein a symbol having a shape which is asymmetric in a left-right direction is provided to the labelling portion.

4. The eyeglass member according to claim 3, wherein the symbol is formed by a half-cut in the eyeglass member.

5. The eyeglass member according to claim 4, wherein the symbol is formed by a group of open-ring patterns in a surface direction of the eyeglass member.

6. The eyeglass member according to any one of claims 1 to 5, wherein the labelling portion is formed protruding outward in a surface direction of the eyeglass member.

7. A pair of eyeglasses comprising the eyeglass member according to any one of claims 1 to 6 and a frame to which the eyeglass member is attached.

8. The pair of eyeglasses according to claim 7, comprising:
a fitting portion which is fitted to a part of the eyeglass member and mutually positions the frame and the eyeglass member; and
a fitting preventing portion which, when an orientation of the frame relative to the eyeglass member is different from a presumed orientation, prevents fitting of the fitting portion.
